**Europäisches Patentamt**

(19) **European Patent Office**

**Office européen des brevets**

(11) Veröffentlichungsnummer: **0 196 535 B1**

(12) **EUROPÄISCHE PATENTSCHRIFT**

(45) Veröffentlichungstag der Patentschrift:
16.08.89

(51) Int. Cl.⁴: **B23P 19/00**, B65G 47/14

(21) Anmeldenummer: **86103576.4**

(22) Anmeldetag: **18.03.86**

(54) **Teilezuführer für ein Montagesystem.**

(30) Priorität: **19.03.85 DE 3509805**

(43) Veröffentlichungstag der Anmeldung:
**08.10.86 Patentblatt 86/41**

(45) Bekanntmachung des Hinweises auf die Patenterteilung:
**16.08.89 Patentblatt 89/33**

(84) Benannte Vertragsstaaten:
**AT BE CH DE FR GB IT LI NL SE**

(56) Entgegenhaltungen:
**AT-B- 341 426
DE-C- 49 486
FR-A- 1 361 658
GB-A- 2 060 584
SU-A- 931 371
US-A- 1 563 365
US-A- 3 266 642**

**PATENTS ABSTRACTS OF JAPAN, Band 6,
Nr. 50 (M-120)[928], 3. April 1982
PATENTS ABSTRACTS OF JAPAN, Band 8,
Nr. 258 (M-340)[1695], 27. November 1984
PATENTS ABSTRACTS OF JAPAN, Band 8,
Nr. 177 (M-317)[1614], 15. August 1984**

(73) Patentinhaber: **Heckler & Koch GmbH, Pfäfflinstrasse
Postfach 1329, D-7238 Oberndorf(DE)**

(72) Erfinder: **Bilger, Bernhard, Herbergstrasse 13,
D-7215 Bösingen(DE)**

(74) Vertreter: **Patentanwälte Kohler - Schwindling - Späth,
Hohentwielstrasse 41, D-7000 Stuttgart 1(DE)**

ACTORUM AG

## Beschreibung

Die Erfindung betrifft einen Teilezuführer für ein Montagesystem, mit einem Teilebunker, der in eine vorbestimmte Anzahl von Segmenten unterteilt ist, und mit einer Zubringe-Einrichtung, die mit den einzelnen Segmenten verbindbar ist und Teile aus den Segmenten einer Übergabestation zuführt und dabei ausrichtet und/oder vereinzelt und/oder in ihrer Lage prüft, oder dergleichen, wobei entsprechend der Anzahl der Segmente eine gleiche Anzahl von Zubringe-Einrichtungen vorgesehen sind, die jeweils einzeln mit einzelnen Segmenten verbindbar sind.

Ein derartiger Teilezuführer ist aus der GB-A 2 060 584 bekannt. Bei dem bekannten System weist der Teilebunker vertikal übereinander angeordnete Behälter auf, aus denen die Teile entnommen werden. Die Zubringe-Einrichtungen sind den einzelnen Behältern des Teilebunkers fest zugeordnet. Die Anzahl der unterschiedlichen Teile, die aus dem Teilebunker entnommen werden können, ohne daß die im Teilebunker enthaltenen Teile ausgewechselt werden, entspricht somit der Anzahl der Zubringe-Einrichtungen.

Teilezuführer der eingangsgenannten Art werden dazu verwendet, Teile in genügender Anzahl bereit zu halten und dem jeweils verwendeten Handhabungssystem, beispielsweise einem Montageband oder einem sogenannten "Industrieroboter", einzeln und lagerichtig zuzuführen.

Unter "Teile" versteht man in diesem Zusammenhang sowohl Maschinenteile an sich, wie auch Befestigungsteile wie Schrauben, Nieten und dergleichen, ebenso wie weitere standardisierte Maschinenelemente, beispielsweise Unterlegscheiben, Federn, Bolzen und vieles andere mehr.

Die Teile werden in dem sogenannten Teilebunker gespeichert, wobei die Teile im Teilebunker als Schüttgut vorhanden sind.

Die vom Teilebunker zum Handhabungssystem führenden Zubringe-Einrichtungen können eine Vielzahl von Funktionen, beispielsweise magazinieren, weitergeben, abzweigen, zusammenfügen, ausrichten, Lage prüfen, wenden, zuteilen, ausgeben und so fort, ausführen.

Bei modernen Montagesystemen, die nach Art einer Fließfertigung arbeiten, sind die handzuhabenden Werkstücke auf Werkstückträgern angeordnet, die nacheinander dem Handhabungssystem zugeführt werden. Das Handhabungssystem kann an der Mehrzahl von Werkstücken nacheinander unterschiedliche Handhabungsvorgänge ausführen.

Dies kann entweder dadurch erfolgen, daß an ein und demselben Werkstück nacheinander mehrere Handhabungsvorgänge ausgeführt werden, ehe auf das nächste Werkstück umgeschaltet wird, es ist jedoch auch möglich, zunächst alle Werkstücke in einem Durchgang mit einem Handhabungsvorgang zu bearbeiten und anschließend in einem zweiten Durchgang oder weiteren Durchgängen nacheinander weitere Handhabungsvorgänge vorzunehmen.

In beiden genannten Fällen ist es erforderlich, dem Handhabungssystem nacheinander unterschiedliche Teile zuzuführen, beispielsweise zunächst eine Unterlegscheibe und dann eine Schraube.

Bei bisher bekannten Montagesystemen hat man hierzu entweder, wie bei dem eingangs genannten System, mehrere Teilezuführer ständig nebeneinander im Arbeitsbereich des Handhabungssystems angeordnet, oder aber für einen ersten Durchlauf einen ersten Teilezuführer an das Handhabungssystem herangebracht und diesen dann für einen zweiten Durchlauf gegen einen anderen Teilezuführer ausgetauscht.

Beide Systeme haben jedoch Nachteile, weil im erstgenannten Fall die Anzahl der Teile dadurch begrenzt ist, daß im Arbeitsraum des Handhabungssystems nicht Platz für beliebig viele Teilezuführer vorhanden ist. Aus Platzgründen können daher in der Praxis höchstens zwei, allenfalls drei Teilezuführer ständig neben dem Handhabungssystem angeordnet sein.

Bei der anderen Vorgehensweise mit zeitlich aufeinanderfolgendem Wechsel der Teilezuführer sind bei jedem Wechsel des Handhabungsvorganges erhebliche Umrüstzeiten erforderlich, weil übliche Teilezuführer recht schwere und unhandliche Geräte sind, die überdies sorgfältig räumlich fixiert werden müssen, weil sie in der Regel zum Transportieren der Teile Rüttler enthalten, die eine räumliche Verankerung des Teilezuführers erfordern.

Ein aus der DE-C 49 486 bekannter Teilezuführer kann nur gleiche Teile speichern. Die Zubringe-Vorrichtung muß bei einem Teilewechsel ausgetauscht werden.

Aus der US-A 1 563 365 ist ein weiterer Teilezuführer für Schweißelektrodenrohlinge bekannt, der die Rohlinge mit unterschiedlichem Durchmesser vereinzelt und einer Übergabestation zuführt.

Dieser Teilezuführer kann nur Stabmaterial speichern und die Übergabe gespeicherter Teile aus unterschiedlichen Abteilungen eines Teilebunkers an eine Zubringe-Vorrichtung erfolgt aus allen Abteilungen gleichseitig. Einzelne Abteilungen des Teilebunkers können nicht frei wählbar mit Zubringe-Vorrichtungen verbunden werden.

Weitere Teilezuführer sind in dem Buch "Industrieroboter" von Warnecke & Schraft, 2. Aufl., Krausskopf-Verlag, Mainz, 1973, Seiten 106 bis 137, beschrieben.

Der Erfindung liegt daher die Aufgabe zugrunde, einen Teilezuführer der eingangs genannten Art dahingehend weiterzubilden, daß bei Montagesystemen, die in zeitlich dichter Folge der Zuführung unterschiedlicher Teile bedürfen, ein Wechsel dieser Teile schnell und ohne manuelle Umrüstarbeiten möglich ist.

Diese Aufgabe wird erfindungsgemäß dadurch gelöst, daß der Teilebunker als um eine Achse drehbares Karussell mit sektorförmigen Segmenten ausgebildet ist, daß die Zubringe-Einrichtungen als um ihre Längsachse drehbare Trommel mit über deren Umfang verteilten Schienen ausgebildet sind, und daß die Zubringe-Einrichtungen jeweils einzeln mit einzelnen Segmenten frei wählbar verbindbar sind.

Die der Erfindung zugrundeliegende Aufgabe wird damit vollkommen gelöst. Die bei unterschiedlichen, aufeinanderfolgenden Handhabungsvorgängen benötigten unterschiedlichen Teile werden sämtlich ständig in einem unterteilten Teilebunker zur Verfügung gehalten und es sind auch die erforderlichen Zubringe-Einrichtungen ständig vorhanden, wobei nur ein taktweises Umschalten der Verbindung zwischen dem jeweiligen Bunkersegment und der zugehörigen Zubringe-Einrichtung erforderlich ist. Statt mehrerer einzelner, nebeneinander stehender Teilezuführer wird demzufolge ein integrierter Mehrfach-Teilezuführer vorgesehen, der die eingangs geschilderten Probleme mit einem Schlag löst.

Ein weiterer Vorteil besteht darin, daß auf einer begrenzten Grundfläche große Mengen an Teilen gebunkert werden können, je nachdem wie hoch man den Teilebunker ausbildet. Durch Verdrehen des Teilebunkers um eine Hochachse, die ggf. auch geneigt oder gar horizontal verlaufen kann, kann jeweils eines der Segmente, dessen zugeordnete Teile gerade benötigt werden, in eine Ausgabeposition gefahren werden, von der aus diese Teile aus dem Teilebunker entnehmbar sind.

Weiter ist von Vorteil, daß ein schnelles, taktweises Umschalten von einer Zubringe-Einrichtung auf eine andere in einfacher Weise dadurch möglich ist, daß man die Trommel um einen vorbestimmten Winkel dreht. Es kann hierdurch in Sekundenschnelle, während sich beispielsweise der karussellartig ausgebildete Teilebunker um seine Hochachse dreht, das nächste Paar Segment/Schiene in die Arbeitsstellung gebracht werden. Weiter ist von Vorteil, daß die so ausgebildete Zubringe-Einrichtungen zum Orientieren bzw. Ausrichten der Teile vorgesehen sind.

Die Schienen sind vorzugsweise mit Schikanen zum Ausrichten der Teile versehen.

Bei einer weiteren Ausgestaltung der Erfindung ist ein erster Rüttler vorgesehen, der nur auf das jeweils mit einer Zubringe-Einrichtung verbundene Segment einwirkt.

Diese Maßnahme hat den Vorteil, daß im Gegensatz zu früheren Lösungsversuchen mit mehreren einzelnen Teilezuführern nur noch ein einziger gemeinsamer Rüttler vorgesehen ist, der jeweils auf das in Funktion befindliche Segment einwirkt. Besonders vorteilhaft ist dies bei dem karussellartig ausgebildeten Teilebunker, bei dem das jeweilige Segment durch Drehen des Teilebunkers um seine Achse in eine vorbestimmte Position gebracht wird, weil bei dieser Ausführungsform dann der erste Rüttler raumfest angeordnet sein kann.

In entsprechender Weise kann weiter ein einziger gemeinsamer Rüttler auf die jeweils mit dem einen Segment verbundene Zubring-Einrichtung einwirken.

Die sich durch diese Maßnahmen einstellenden Vorteile entsprechen den zu dem vorher erwähnten Ausführungsbeispiel genannten.

Bei einer weiteren bevorzugten Ausgestaltung der Erfindung sind die Segmente im Bodenbereich mit einer Tür versehen, an die eine erste Rutsche angrenzt. Bevorzugt sind die Zubringe-Einrichtungen dabei unterhalb des Teilebunkers angeordnet und es führt weiter bevorzugt eine zweite Rutsche vom freien Ende der ersten Rutsche zu der jeweiligen Zubringe-Einrichtung.

Durch diese Maßnahmen ergibt sich eine Reihe von Vorteilen. Entnimmt man nämlich die Teile aus dem jeweiligen Segment des Teilebunkers an dessen Boden, sind aufwendige Fördereinrichtungen, mit denen die Teile zunächst aus dem Teilebunker herausgehoben werden müssen, entbehrlich. Durch die erste Rutsche und die Anordnung der Zubringe-Einrichtungen unterhalb des Teilebunkers wird erreicht, daß, abgesehen von einem zweckmäßigerweise verwendeten Rüttler, keine weiteren Transporteinrichtungen erforderlich sind, weil die Teile nur unter Schwerkrafteinfluß auf die erste Rutsche und von dieser mittelbar oder unmittelbar aus die Zubringe-Einrichtungen gelangen. Schließlich hat das Vorsehen einer zweiten Rutsche den Vorteil, daß eine höhere Flexibilität mit der Anordnung erreicht wird, weil die Zubringe-Einrichtungen nicht unmittelbar unterhalb des Teilebunkers angeordnet sein müssen. Auch kann die zweite Rutsche, wie weiter unten noch geschildert wird, in vorteilhafter Weise dazu dienen, Höhenunterschiede auszugleichen.

Bei einem weiteren Ausführungsbeispiel der Erfindung ist der Neigungswinkel der Längsachse der Trommel einstellbar.

Diese Maßnahme hat ebenfalls einen wichtigen Vorteil, weil nämlich auch durch die Einstellung des Neigungswinkels die Transportgeschwindigkeit auf den Schienen eingestellt werden kann, was bei Teilen mit sehr unterschiedlichem Gewicht von großem Interesse sein kann. Die Verstellung des Neigungswinkels kann gleichzeitig mit dem Verdrehen des karussellartigen Teilebunkers sowie der Trommel erfolgen, so daß sich auch hierdurch die "Umrüstzeit" nicht erhöht.

Eine gute Wirkung wird erfindungsgemäß weiterhin dadurch erzielt, daß das von den Rutschen abgewandte Ende der jeweils in Funktion befindlichen Schiene mit jeweils einer zugehörigen und gleichfalls an die Teile angepaßten weiteren Zubringe-Einrichtung, vorzugsweise einer Vereinzel-Einrichtung, verbunden ist, wobei die weiteren Zubringe-Einrichtungen im Takt mit den Segmenten bzw. den Schienen umschaltbar sind.

Diese Maßnahme hat den Vorteil, daß durch modularen Aufbau der Zubringe-Einrichtungen, d.h. durch Unterteilen in verschiedene der eingangs genannten Funktionen, eine hohe Flexibilität erreichbar ist, um die Teile letztendlich in gewünschter Position, Ausrichtung und Anzahl bereitstellen zu können.

Hierzu ist in bevorzugter Ausgestaltung der Erfindung die weitere Zubringe-Einrichtung an ihrem von der Trommel abgewandten Ende mit einer Rampe verbunden, von der die Teile einzeln und lagerichtig entnehmbar sind.

Bei einer weiteren bevorzugten Variante der Erfindung ist unterhalb der Zubringe-Einrichtungen ein Absturzschacht vorgesehen, der in einen Förderer mündet, mit dem von der jeweils in Funktion befindlichen Zubringe-Einrichtung abgestürzte Teile zu den Rutschen rückförderbar sind. Der Förderer kann beispielsweise ein Bürstenförderer mit in einer Vertikalebene umlaufendem Förderband sein.

Schließlich ist bevorzugt vorgesehen, die Zubringe-Einrichtungen jeweils austauschbar, vorzugsweise mit Schnellverschlüssen, auszubilden.

Diese Maßnahme hat den Vorteil, daß beispielsweise die Schienen an der Trommel oder die Vereinzel-Einrichtungen nach dem Ende des gesamten Montagevorganges mit wenigen Handgriffen ausgewechselt werden können, damit der erfindungsgemäße Teilezuführer nach entsprechender Beschickung der Segmente des Teilebunkers für eine neue Sequenz von Montagevorgängen bereit ist.

Weitere Vorteile ergeben sich aus der Beschreibung und der beigefügten Zeichnung. Ebenso können die vorstehend genannten und die weiter noch aufgeführten Merkmale erfindungsgemäß jeweils einzeln oder in beliebigen Kombinationen miteinander verwendet werden.

Ein Ausführungsbeispiel der Erfindung ist in der Zeichnung dargestellt und wird in den nachfolgenden Beschreibung näher erläutert. Es zeigen:

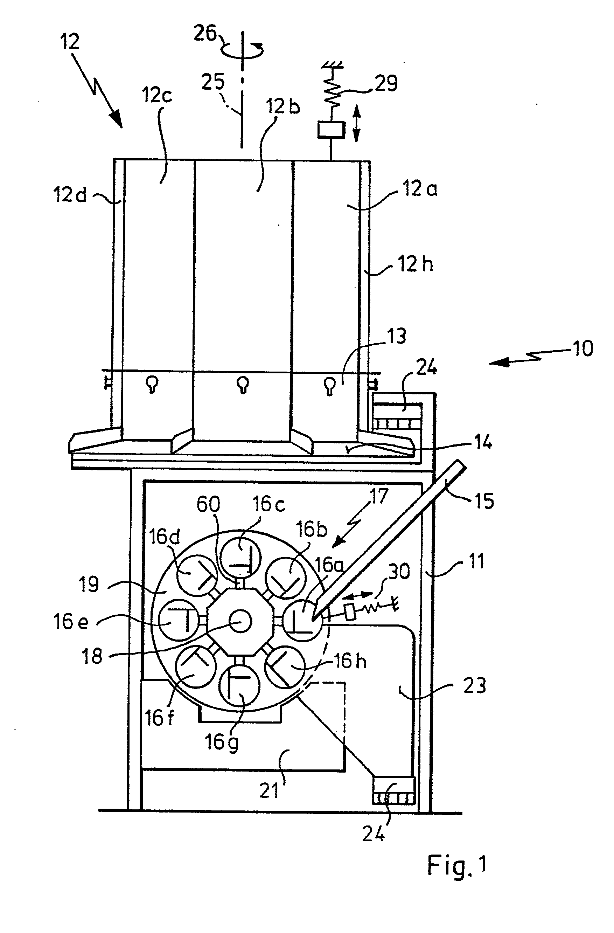

Fig. 1 einen Teilezuführer gemäß der vorliegenden Erfindung in Frontalansicht;
Fig. 2 den Teilezuführer gemäß Fig. 1 in Draufsicht;
Fig. 3
und 4 den Teilezuführer gemäß Fig. 1, teilweise abgebrochen dargestellt, in einer Seitenansicht in zwei unterschiedlichen Arbeitsstellungen.

In den Figuren bezeichnet 10 jeweils ein Ausführungsbeispiel eines erfindungsgemäßen Teilezuführers. Auf einem Gestell 11 befindet sich ein oktogonförmiger Teilebunker 12, der in acht Segmente 12a bis 12h unterteilt ist. Im Bodenbereich jedes Segmentes 12a bis 12h befindet sich eine Tür 13 und, von dieser ausgehend, eine erste Rutsche 14, die fest mit dem Teilebunker 12 verbunden ist. Schräg unterhalb der ersten Rutsche 14 befindet sich eine zweite Rutsche 15, die, wie weiter unten noch erläutert wird, in der Höhe verstellbar ausgebildet ist.

Unterhalb des Teilebunkers 12 befindet sich innerhalb des Gestelles 11 eine Trommel 17 mit einer axialen Welle 18, die an beiden Enden Scheiben 19 bzw. 20 trägt. Zwischen den Scheiben 19, 20 sind, über den Umfang der Scheiben 19, 20 verteilt und axial ausgerichtet, acht Schienen 16a bis 16h angeordnet. Die Anzahl der Schienen 16a bis 16h entspricht der Anzahl der Segmente 12a bis 12h.

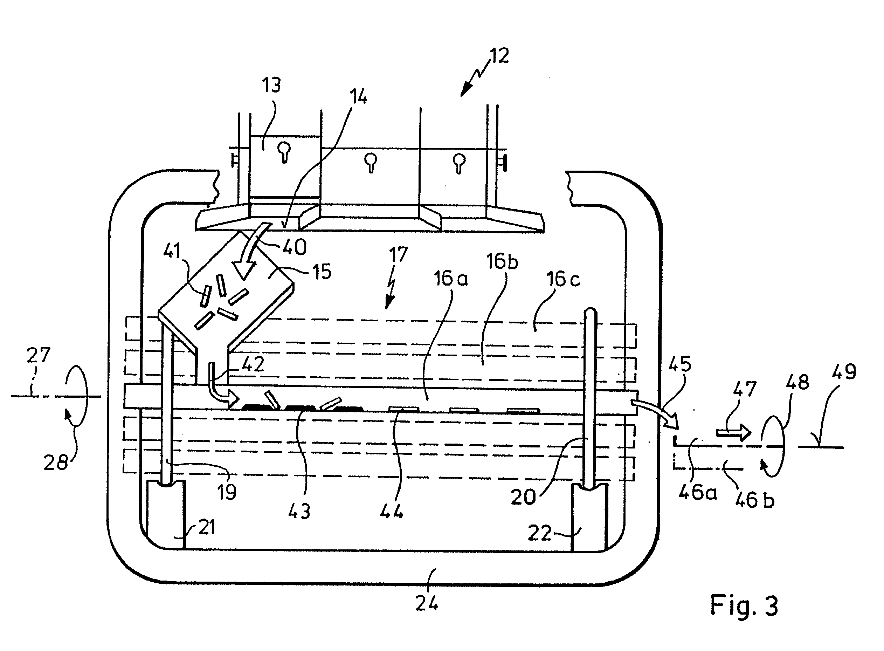

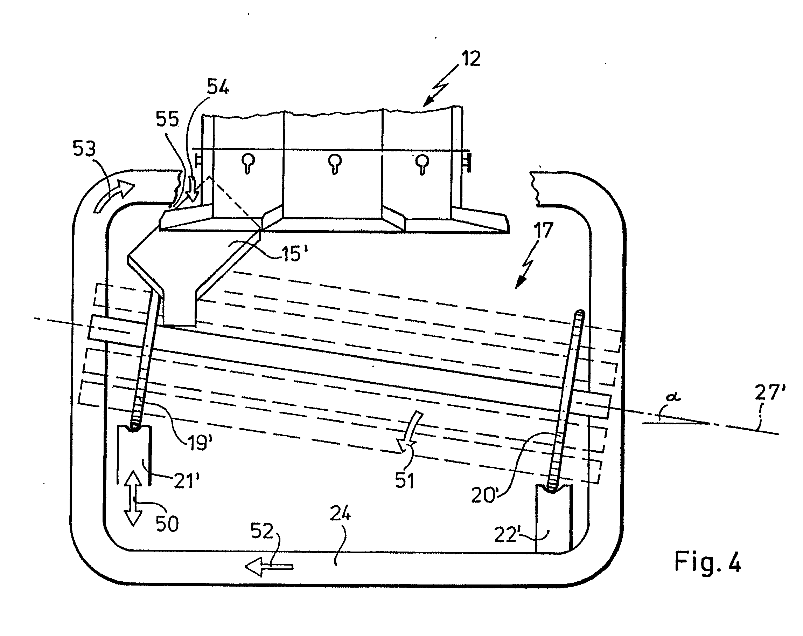

Wie man deutlich aus den Fig. 3 und 4 erkennen kann, sind die Scheiben 19, 20 in Lagerböcken 21, 22 gelagert, von denen der Lagerbock 21 in der Höhe verstellbar ausgebildet ist.

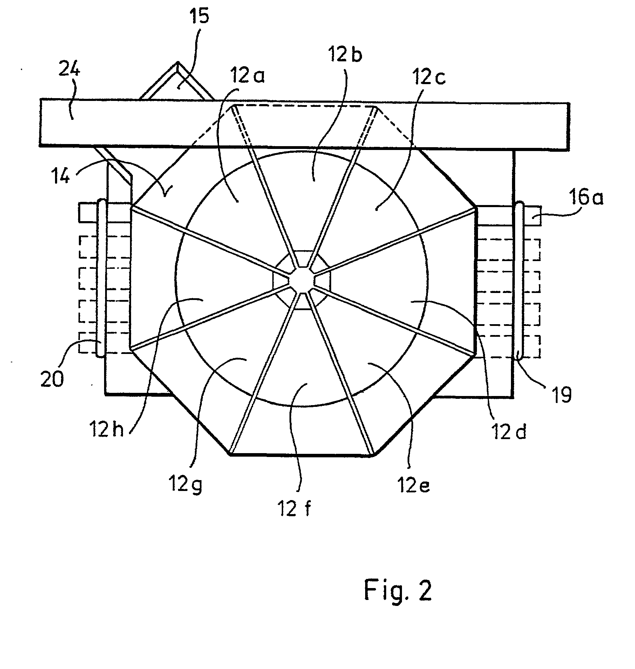

In Fig. 1 kann man erkennen, daß seitlich unterhalb der Trommel 17 ein Absturzschacht 23 vorgesehen ist, der unten in einen umlaufenden Bürstenförderer 24 mündet. Der Bürstenförderer 24 läuft in einer Vertikalebene um, wie man aus den Fig. 2 und 4 entnehmen kann, und mündet oben im Bereich der zweiten Rutsche 15.

Die Funktion des erfindungsgemäßen Teilezuführers ist wie folgt:
In Fig. 1 ist eine vertikale Achse 25 eingetragen, um die, wie mit einem Pfeil 26 angedeutet, der oktogonförmige Teilebunker 12 nach Art eines Karussells verdreht werden kann. In der Stellung gemäß Fig. 1 befindet sich das Segment 12a mit der Tür 13 und der ersten Rutsche 14 in der Arbeitsstellung.

In entsprechender Weise kann, wie Fig. 3 zeigt, die Trommel 17 um eine horizontale oder geneigte Achse 27 in Richtung eines Pfeiles 28 verdreht werden. In der in den Figuren dargestellten Stellung befindet sich die Schiene 16a in der Arbeitsstellung.

In den acht Segmenten 12a bis 12h sind acht unterschiedliche Teile in genügend großer Anzahl gespeichert. Um in der in den Figuren dargestellten Arbeitsstellung Teile aus dem Segment 12a entnehmen und auf die Schiene 16a fördern zu können, ist zunächst am Teilebunker 12 ein gemeinsamer erster Rüttler 29 vorgesehen, der in Fig. 1 durch ein Feder-Masse-System angedeutet ist. Der erste Rüttler 29 ist gemeinsam für alle Segmente 12a bis 12h vorgesehen und raumfest in der vom Segment 12a eingenommenen Arbeitsstellung angeordnet.

In entsprechender Weise ist ein zweiter Rüttler 30 im Bereich der Trommel 17 angeordnet und wirkt jeweils auf die in Arbeitsstellung befindliche Schiene, im dargestellten Beispiel auf die Schiene 16a ein.

Öffnet man nun, wie in Fig. 3 dargestellt, die Tür 13 etwas nach oben, rutschen Teile 41 in Richtung des Pfeiles 40 über die erste Rutsche 14 und die zweite Rutsche 15 auf die Schiene 16a und werden dort in Richtung des weiteren Pfeiles 42 gefördert, da beide Rüttler 29, 30 eingeschaltet sind. Die Schiene 16a ist mit Schikanen 43 versehen, die an das jeweils zu fördernde Teil angepaßt sind. Es versteht sich, daß statt dieser an sich bekannten Schikanen 43 auch optoelektronische bzw. pneumatische Einrichtungen zum Ausrichten der Teile vorgesehen sein können, wie dies ebenfalls an sich bekannt ist. Während die Teile 41 die Schiene 16a mit Schikanen 43 durchlaufen, werden sie ausgerichtet, wie in Fig. 3 mit Teilen 44 angedeutet. An dem von der zweiten Rutsche 15 abgewandten Ende der Schiene 16a werden die Teile in Richtung eines Pfeiles 45 auf eine Vereinzel-Einrichtung 46a überführt, die ebenfalls an die speziellen Teile angepaßt ist. Weitere Vereinzel-Einrichtungen, von denen eine mit 46b angedeutet ist, sind an dieser Stelle ebenfalls vorhanden und können beispielsweise durch Drehen einer weiteren Trommel in Richtung eines Pfeiles 48 in Arbeitsstellung gebracht werden.

Die Teile 41 bzw. 44 werden in der Vereinzel-Einrichtung 46a in Richtung eines Pfeiles 47 gefördert und vereinzelt und gelangen schließlich einzeln und lagerichtig auf eine als Rampe ausgebildete Übergabestation 49, von der sie mittels eines in den Figuren nicht dargestellten Handhabungssystems, beispielsweise von einem Greifer eines Industrieroboters, ergriffen werden können.

Werden Teile sehr unterschiedlichen Gewichtes mit dem Teilezuführer 10 zugebracht, kann es zweckmäßig sein, die Fördergeschwindigkeit auf der Schiene 16a zusätzlich durch Neigung der Trommel 17 zu variieren. Dies ist auch deswegen besonders sinnvoll, weil der zweite Rüttler 30 für sämtliche Schienen 16a bis 16h gemeinsam vorgesehen ist und die Schienen 16a bis 16h für Teile sehr unterschiedlicher Größe und unterschiedlichen Gewichtes vorgesehen sein können. Es ist daher sehr zweckmäßig, eine zusätzliche Einstellmöglichkeit für die Fördergeschwindigkeit auf den Schienen 16a bis 16h zur Verfügung zu haben.

Wie bereits weiter oben erwähnt wurde, ist der eine Lagerbock 21 in der Höhe verfahrbar ausgebildet, wie mit einem Doppelpfeil 50 in Fig. 4 angedeutet. Entsprechende Elemente sind in der in Fig. 4 eingenommenen Stellung mit einem Apostroph gekennzeichnet.

Man erkennt ohne weiteres, daß in Fig. 4 die Längsachse 27' der Trommel 17 um einen Winkel geneigt ist. Gleichzeitig wird die zweite Rutsche 15' in der Höhe verfahren, so daß ihr unteres Übergabeende stets in definierter Lage zur Schiene 16a steht. Dadurch, daß die zweite Rutsche 15' so groß ausgebildet ist, daß sie das freie Ende der ersten Rutsche 14a in weiten Bereichen überlappt, ist eine sichere Übergabe der Teile aus dem Teilebunker 12 auf die Schiene 16a sichergestellt.

Beim Fördern und Ausrichten der Teile 41, 44 auf der Schiene 16a kann es vorkommen, daß einzelne, nicht ausrichtbare Teile seitlich abstürzen. Dies ist in Fig. 4 mit einem Pfeil 51 dargestellt. Diese Teile fallen in den in Fig. 1 dargestellten Absturzschacht 23 und gelangen an dessen unterem Ende in den Bereich eines umlaufenden Bürstenförderers 24. Sie werden dort in einer in Fig. 4 mit einem Pfeil 52 bezeichneten Richtung gefördert und gelangen nach Durchlaufen einer vertikalen Förderrichtung in Richtung eines Pfeiles 53 in den Bereich einer Öffnung 55 oberhalb der zweiten Rutsche 15'. An dieser Stelle lösen sich die abgestürzten und vom Bürstenförderer 24 transportierten Teile von selbst unter Schwerkrafteinfluß von diesem und gelangen über die zweite Rutsche 15' wieder auf die Schiene 16a.

Sind alle zu montierenden Werkstücke am Handhabungssystem durchgelaufen, wird der Teilebunker 12 um die Achse 25 um einen Takt gedreht, so daß nunmehr beispielsweise das Segment 12b in Arbeitsstellung ist. Gleichzeitig werden die Trommel 1 und auch ggf. die Vereinzel-Einrichtung 46 um einen Takt gedreht, so daß jetzt die Schiene 16b und die Vereinzel-Einrichtung 46b in Arbeitsstellung sind. Für die im Segment 12b enthaltenen speziellen Teile stehen jetzt daran angepaßte Schikanen auf der Schiene 16b bzw. der Vereinzel-Einrichtung 46b zur Verfügung.

Sind sämtliche Montagevorgänge durchgelaufen, kann der Teilzuführer 10 dadurch auf die nächste Montagesequenz umgerüstet werden, daß zum einen die Segmente 12a bis 12h des Teilebunkers 12 neu befüllt werden. Zum anderen können die Schienen 16a bis 16h leicht durch Lösen eines bei 60 angedeuteten Schnellverschlusses abgenommen und gegen entsprechende andere Schienen ausgetauscht werden. Entsprechendes gilt für die Vereinzel-Einrichtung 46.

## Patentansprüche

1. Teilezuführer für ein Montagesystem, mit einem Teilebunker (12), der in eine vorbestimmte Anzahl von Segmenten (12a bis 12h) unterteilt ist, und mit einer Zubringe-Einrichtung (16a bis 16h, 17), die mit den einzelnen Segmenten (12a bis 12h) verbindbar ist und Teile aus den Segmenten (12a bis 12h) einer Übergabestation (49) zuführt und dabei ausrichtet und/oder vereinzelt und/oder in ihrer Lage prüft, oder dergleichen, wobei entsprechend der Anzahl der Segmente (12a bis 12h) eine gleiche Anzahl von Zubringe-Einrichtungen (14) vorgesehen sind, die jeweils einzeln mit einzelnen Segmenten (12a bis 12h) verbindbar sind, dadurch gekennzeichnet, daß der Teilebunker (12) als um eine Achse (25) drehbares Karussell mit sektorförmigen Segmenten (12a bis 12h) ausgebildet ist, daß die Zubringe-Einrichtungen als um ihre Längsachse (27) drehbare Trommel (17) mit über deren Umfang verteilten Schienen (16a bis 16h) ausgebildet sind, und daß die Zubringe-Einrichtungen (16a bis 16h, 17) jeweils einzeln mit einzelnen Segmenten (12a bis 12h) frei wählbar verbindbar sind.

2. Teilezuführer nach Anspruch 1, dadurch gekennzeichnet, daß ein erster Rüttler (29) vorgesehen ist, der nur auf das jeweils mit einer Zubringe-Einrichtung verbundene Segment (12a) einwirkt.

3. Teilezuführer nach einem der Ansprüche 1 bis 2, dadurch gekennzeichnet, daß ein zweiter Rüttler (30) vorgesehen ist, der nur auf die jeweils mit dem einen Segment (12a bis 12h) verbundene Zubringeinrichtung einwirkt.

4. Teilezuführer nach einem der Ansprüche 1 bis 3, dadurch gekennzeichnet, daß die Segmente (12a bis 12h) im Bodenbereich mit einer Tür (13) versehen sind, an die eine erste Rutsche (14) angrenzt.

5. Teilezuführer nach einem der Ansprüche 1 bis 4, dadurch gekennzeichnet, daß die Zubringe-Einrichtungen unterhalb des Teilbunkers (12) angeordnet sind.

6. Teilezuführer nach Anspruch 5, dadurch gekennzeichnet, daß eine zweite Rutsche (15) vom freien Ende der ersten Rutsche (14) zu der jeweiligen Zubringe-Einrichtung führt.

7. Teilezuführer nach einem der Ansprüche 1 bis 6, dadurch gekennzeichnet, daß die Schienen (16a bis 16h) mit Schikanen (43) zum Ausrichten der Teile (41, 44) versehen sind.

8. Teilezuführer nach einem der Ansprüche 1 bis 7, dadurch gekennzeichnet, daß der Neigungswinkel der Längsachse (27) der Trommel (17) einstellbar ist.

9. Teilezuführer nach den Ansprüchen 6 und 8, dadurch gekennzeichnet, daß die Trommel (17) an dem mit der zweiten Rutsche (15) in Verbindung stehenden Ende in der Höhe verfahrbar ist und daß die zweite Rutsche (15) ebenfalls höhenverstellbar ist.

10. Teilezuführer nach einem der Ansprüche 1 bis 9, dadurch gekennzeichnet, daß das von den Rutschen (14 bzw. 15) abgewandte Ende der jeweils in Funktion befindlichen Schiene (16a) mit jeweils einer zugehörigen weiteren Zubringe-Einrichtung, vorzugsweise einer Vereinzel-Einrichtung (46a, 46b) verbunden werden kann, wobei die weiteren Zubringe-Einrichtungen im Takt mit den Segmenten (12a bis 12h) bzw. den Schienen (16a) umschaltbar sind.

11. Teilezuführer nach Anspruch 10, dadurch gekennzeichnet, daß die weiteren Zubringe-Einrichtungen an ihrem von der Trommel (17) abgewandten Ende mit einer Rampe (49) verbunden werden können, von der die Teile (41, 44) einzeln und lagerichtig entnehmbar sind.

12. Teilezuführer nach einem der Ansprüche 1 bis 11, dadurch gekennzeichnet, daß unterhalb der Zubringe-Einrichtungen ein Absturzschacht (23) vorgesehen ist, der in einen Förderer (24) mündet, mit dem von der jeweils in Funktion befindlichen Zubringe-Einrichtung abgestürzte Teile (41, 44) zu den Rutschen (14 bzw. 15) rückförderbar sind.

13. Teilezuführer nach einem der Ansprüche 1 bis 12, dadurch gekennzeichnet, daß die Zubringe-Einrichtungen jeweils austauschbar, vorzugsweise mit Schnellverschlüssen (60), ausgebildet sind.

## Claims

1. Parts supplier for an assembly system, with a parts bin (12) subdivided into a predetermined number of segments (12a to 12h), and with a feeding mechanism (16a to 16h, 17), which is connectable with the individual segments (12a to 12h) and supplies parts from the segments (12a to 12h) to a transfer station (49), whilst orienting and/or separating and/or checking the position, etc. thereof and, in accordance with the number of segments (12a to 12h), is provided an equal number of feeding mechanisms (14), which in each case can be individually connected to the single segments (12a to 12h), characterized in that the parts bin (12) is constructed as a carousel with sector-like segments (12a to 12h) rotatable about an axis (25), that the feeding mechanisms are constructed as drums (17) rotatable about a longitudinal axis (27) with rails (16a to 16h) distributed over their circumference and that the feeding mechanisms (16a to 16h, 17) can in each case be individually freely selectably connected to single segments (12a to 12h).

2. Parts supplier according to claim 1, characterized in that a first vibrator (29) is provided, which only acts on the particular segment (12a) connected to a feeding mechanism.

3. Parts supplier according to one of the claims 1 to 2, characterized in that a second vibrator (30) is provided, which only acts on the particular feeding mechanism connected to a segment (12a to 12h).

4. Parts supplier according to one of the claims 1 to 3, characterized in that the segments (12a to 12h) are provided in the bottom region with a door (13), to which is connected a first chute (14).

5. Parts supplier according to one of the claims 1 to 4, characterized in that the feeding mechanisms are positioned below the parts bin (12).

6. Parts supplier according to claim 5, characterized in that a second chute (15) leads from the free end of the first chute (14) to the particular feeding mechanism.

7. Parts supplier according to one of the claims 1 to 6, characterized in that the rails (16a to 16h) are provided with baffle plates (43) for orienting the parts (41, 44).

8. Parts supplier according to one of the claims 1 to 7, characterized in that the angle of inclination of the longitudinal axis (27) of drum (17) is adjustable.

9. Parts supplier according to claims 6 and 8, characterized in that the drum (17) at its end connected to the second chute (15) can be moved upwards and that the second chute (15) is also vertically adjustable.

10. Parts supplier according to one of the claims 1 to 9, characterized in that the end of the particular operating rail (16a) remote from the chutes (14 or 15) can be connected to an associated further feeding mechanism, preferably a separating device (46a, 46b) and it is possible to change over the further feeding mechanisms synchronously with the segments (12a to 12h) or the rail (16a).

11. Parts supplier according to claim 10, characterized in that the further feeding mechanisms can be connected at their end remote from drum (17) to a ramp (49) from which the parts (41, 44) can be removed individually and in the correct position.

12. Parts supplier according to one of the claims 1 to 11, characterized in that a dropping shaft (23) is provided below the feeding mechanisms and issues into a conveyor (24), with which the parts (41, 44) which have dropped from the operating feeding mechanism can be conveyed back to the chutes (14 or 15).

13. Parts supplier according to one of the claims 1 to 12, characterized in that the feeding mechanisms are constructed interchangably, preferably using snap closures (60).

## Revendications

1. Dispositif d'alimentation de pièces pour un système d'assemblage comprenant une trémie à pièces (12), qui est subdivisée en un nombre prédéterminé de segments (12a à 12h), et un dispositif d'amenée (16a à 16h, 17) qui peut être relié aux différents segments (12a à 12h) et qui alimente une station de transfert (49) en pièces à partir des segments (12a à 12h), les aligne et/ou les individualise et/ou les teste dans leur position, ou analogues, un nombre de dispositifs d'amenée (14) égal au nombre de segments (12a à 12h) étant prévu, ces dispositifs pouvant être reliés chacun individuellement aux segments individuels (12a à 12h), caractérisé en ce que la trémie à pièces (12) est réalisée sous la forme d'un carrousel capable de pivoter autour d'un axe (25) et comprenant des segments en forme de secteurs (12a à 12h), en ce que les dispositifs d'amenée sont réalisés sous la forme d'un tambour (17) capable de pivoter autour de son axe longitudinal (27) et comprenant des rails (16a à 16h) qui sont répartis sur son pourtour et en ce que les dispositifs d'amenée (16a à 16h, 17) peuvent être reliés chacun individuellement aux segments individuels (12a à 12h) au choix.

2. Dispositif d'alimentation de pièces suivant la revendication 1, caractérisé en ce qu'il est prévu un premier secoueur (29), qui agit uniquement sur le segment (12a) respectivement relié à un dispositif d'amenée.

3. Dispositif d'alimentation de pièces suivant l'une des revendications 1 et 2, caractérisé en ce qu'il est prévu un deuxième secoueur (30), qui agit uniquement sur le dispositif d'amenée respectivement relié à l'un des segments (12a à 12h).

4. Dispositif d'alimentation de pièces suivant l'une des revendications 1 à 3, caractérisé en ce que dans la partie du bas les segments (12a à 12h) sont pourvus d'une porte (13) à laquelle aboutit une première goulotte (14).

5. Dispositif d'alimentation de pièces suivant l'une des revendications 1 à 4, caractérisé en ce que les dispositifs d'amenée sont agencés sous la trémie à pièces (12).

6. Dispositif d'alimentation de pièces suivant la revendication 5, caractérisé en ce qu'une deuxième goulotte (15) conduit au dispositif d'amenée respectif à partir de l'extrémité libre de la première goulotte (14).

7. Dispositif d'alimentation de pièces suivant l'une des revendications 1 à 6, caractérisé en ce que les rails (16a à 16h) sont pourvus de chicanes (43) pour l'alignement des pièces (41, 44).

8. Dispositif d'alimentation de pièces suivant l'une des revendications 1 à 7, caractérisé en ce que l'angle d'inclinaison de l'axe longitudinal (27) du tambour (17) est réglable.

9. Dispositif d'alimentation de pièces suivant les revendications 6 et 8, caractérisé en ce que le tambour (17) est déplaçable en hauteur à l'extrémité se trouvant en liaison avec la deuxième goulotte (15) et en ce que la deuxième goulotte (15) est également déplaçable en hauteur.

10. Dispositif d'alimentation de pièces suivant l'une des revendications 1 à 9, caractérisé en ce que l'extrémité, opposée aux goulottes (14 et respectivement 15), du rail (16a) respectivement en service peut être reliée à un dispositif d'amenée supplémentaire correspondant, de préférence à un dispositif d'individualisation (46a, 46b), les dispositifs d'amenée supplémentaires étant commutables en cadence avec les segments (12a à 12h) et respectivement les rails (16a).

11. Dispositif d'alimentation de pièces suivant la revendication 10, caractérisé en ce que les dispositifs d'amenée supplémentaires peuvent être reliés à leur extrémité opposée au tambour (17) à une rampe (49), à partir de laquelle les pièces (41, 44) peuvent être prélevées individuellement et en position correcte.

12. Dispositif d'alimentation de pièces suivant l'une des revendications 1 à 11, caractérisé en ce qu'en dessous des dispositifs d'amenée il est prévu un entonnoir de chute (23) qui débouche dans un convoyeur (24) au moyen duquel des pièces (41, 44) tombées du dispositif d'amenée se trouvant respectivement en fonctionnement peuvent être renvoyées vers les goulottes (14 et respectivement 15).

13. Dispositif d'alimentation de pièces suivant l'une des revendications 1 à 12, caractérisé en ce que les dispositifs d'amenée sont chacun réalisés de manière interchangeable, en étant de préférence munis de fermetures instantanées (60).

EP 0 196 535 B1

Fig. 1

Fig. 2

Fig. 3

EP 0 196 535 B1

Fig. 4